# EUROPÄISCHE PATENTANMELDUNG

(11) **EP 1 101 655 A2**
(43) Veröffentlichungstag der Anmeldung: **23.05.2001**
(21) Anmeldenummer: 00124751.9
(22) Anmeldetag: 13.11.2000
(51) Int. Cl.: B60Q 3/02

(54) **Fahrzeuginnenraumbeleuchtung**

(30) Priorität: 22.11.1999 DE 29920487 U
(71) Anmelder: FER Fahrzeugelektrik GmbH, 99817 Eisenach (DE)
(72) Erfinder: Tietze, Martin, 99817 Eisenach (DE)
(74) Vertreter: Strasser, Wolfgang

(57) **Zusammenfassung**

Eine Fahrzeuginnenraumbeleuchtung, für eine von unten her erfolgende, indirekte Beleuchtung des Dachhimmels (20) des Innenraums eines Fahrzeugs, insbesondere eines Personenkraftwagens umfaßt zur Verbesserung ihrer Anpassung an unterschiedliche Fahrzeugtypen einen langgestreckten, zumindest an seiner Unterseite lichtundurchlässigen Abdeckkörper (21, 25), der von unten her in etwa parallel zur Längsrichtung des Fahrzeuginnenraums am Dachhimmel (20) montierbar ist und an den sich zum Dachhimmel (20) hin wenigstens ein lichtdurchlässiger Seitenbereich (24, 27) anschließt, durch den hindurch das Licht wenigstens einer zwischen dem Abdeckkörper (21, 25) und dem Dachhimmel (20) angeordneten Lichtquelle (4) gegen den Dachhimmel (20) abgestrahlt wird.

## Beschreibung

Die Erfindung betrifft eine Fahrzeuginnenraumbeleuchtung der im Oberbegriff von Anspruch 1 genannten Art.

Aus dem deutschen Gebrauchsmuster 297 19 024 ist eine indirekte Beleuchtung des Dachhimmels eines Kraftfahrzeuges bekannt, bei der die Lichtquelle in die Mittelkonsole einer formstabilen Verkleidungsschale eingebaut ist, welche die Unterseite eines Fahrzeugdaches abdeckt. Diese Mittelkonsole weist einen U-förmigen Querschnitt auf, wobei gegenüberliegende Seitenstege der Mittelkonsole etwa rechtwinkelig an die Unterseite der Verkleidungsschale ansetzen und die Mittelkonsole einen über die gesamte Länge der Verkleidungsschale durchgehenden Hohlraum bildet. Die Seitenstege weisen eine Vielzahl von in einer Reihe in gleichmäßigen Abständen zueinander angeordneten Öffnungen auf, in die Leuchtmittel vorzugsweise in Form von Leuchtdioden oder Glühlampen eingesetzt sind.

Nachteilig an dieser bekannten Anordnung ist, daß die Mittelkonsole mit der Verkleidungsschale einstückig ausgebildet ist, die im allgemeinen von Fahrzeugtyp zu Fahrzeugtyp unterschiedlich geformt ist. Auch ist nur eine indirekte Beleuchtung des Dachhimmels von der Mitte des Fahrgastinnenraums her möglich.

Demgegenüber liegt der Erfindung die Aufgabe zugrunde, eine Fahrzeuginnenraumbeleuchtung der eingangs genannten Art zu schaffen, die ein Minimum an Teilen umfaßt und eine hohe Variabilität besitzt, sodaß sie ohne oder mit nur geringfügigen Änderungen an unterschiedlichste Fahrzeugtypen angepaßt werden kann.

Zur Lösung dieser Aufgabe sieht die Erfindung die im Anspruch 1 zusammengefaßten Merkmale vor. Dadurch, daß die Fahrzeuginnenraumbeleuchtung einen eigenen, das heißt nicht als einstöckige Mittelkonsole einer Verkleidungsschale ausgebildeten, lichtundurchlässigen Abdeckkörper umfaßt, der im eingebauten Zustand die Lichtquelle nach unten hin völlig verdeckt und an den sich wenigstens ein lichtdurchlässiger Seitenbereich anschließt, kann die erfindungsgemäße Fahrzeuginnenraumbeleuchtung nicht nur in der Längs-Mittelachse des Fahrgastinnenraums sondern auch in den Seitenkantenbereichen, an denen der Dachhimmel in die Fahrzeugwände übergeht, montiert werden.

Während sich im erstgenannten Fall ähnlich wie beim Stand der Technik an den lichtundurchlässigen Abdeckkörper auf beiden Seiten lichtdurchlässige Seitenbereiche anschließen, ist im zweiten Fall nur ein solcher Seitenbereich vorgesehen, sodaß das Licht der hinter dem Abdeckkörper angeordneten Lichtquelle vom Randbereich zur Fahrzeugmitte hin abgestrahlt wird. Je nach Bedarf kann ein solcher Abdeckkörper nur auf einer oder auf beiden Seiten des Fahrzeuginnenraums vorgesehen werden.

Bei einer besonders bevorzugten Ausführungsform wird die Lichtquelle von einem Streifen aus einer Elektroluminiszenzfolie gebildet, der auf einem Lichtquellenträger montiert ist, der entweder selbst als Abdeckkörper ausgebildet oder hinter einem Abdeckkörper versteckt montiert werden kann.

Diese und weitere vorteilhafte Ausgestaltungen der erfindungsgemäßen Fahrzeuginnenraumbeleuchtung sind in den Unteransprüchen niedergelegt.

Die Erfindung wird im folgenden anhand von Ausführungsbeispielen unter Bezugnahme auf die Zeichnung beschrieben; in dieser zeigen:
- Fig. 1: eine stark schematisierte, perspektivische, teilweise geschnittene Ansicht einer Ausführungsform der Leuchtanordnung einer erfindungsgemäßen Fahrzeuginnenraumbeleuchtung,
- Fig. 2: eine perspektivische Teilansicht eines Fahrzeuginnenraums mit einer seitlich im Übergangsbereich zwischen Dachhimmel und Seitenwand montierten Fahrzeuginnenraumbeleuchtung gemäß der Erfindung und
- Fig. 3: eine perspektivische Teilansicht eines Fahrzeuginnenraums mit einer zentral im Mittelbereich des Dachhimmels montierten Fahrzeuginnenraumbeleuchtung gemäß der Erfindung.

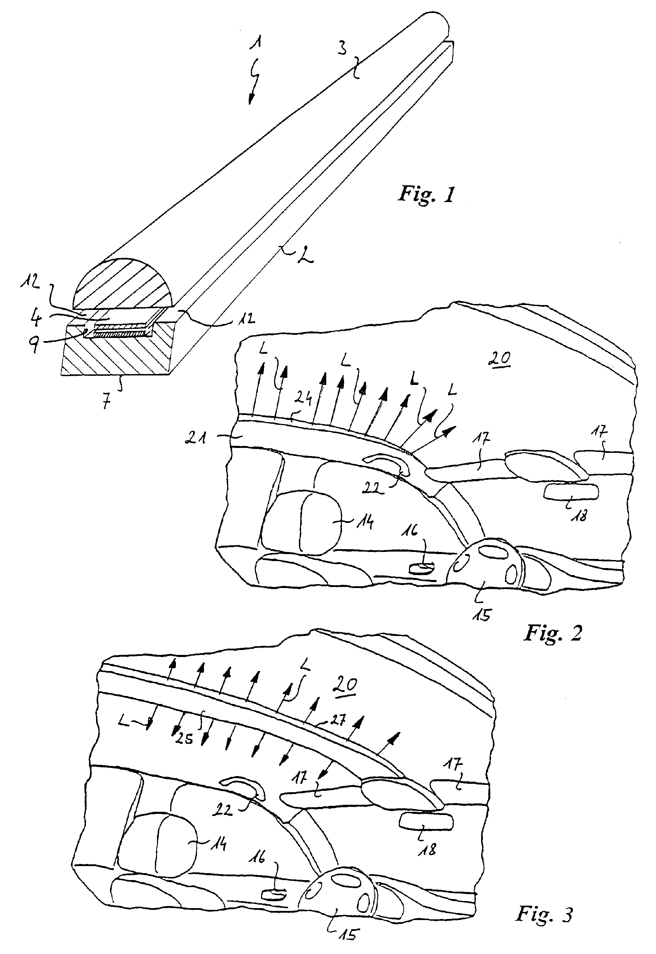

In Fig. 1 ist in auseinandergezogener, perspektivischer Darstellung ein Abschnitt einer Leuchtanordnung 1 einer Fahrzeuginnenraumbeleuchtung dargestellt, die im wesentlichen aus einem Lichtquellenträger 2, einem Lichtaustrittskörper 3 und einer Lichtquelle 4 besteht. Dabei ist die Anordnung gegen die Einbaulage um 90° verkippt dargestellt, das heißt, daß sich die in Fig. 1 unten befindliche Rückseite 7 des Lichtquellenträgers 2 in der Einbaulage in vertikaler Richtung erstreckt. Wie man sieht, ist in der der Rückseite 7 gegenüberliegenden Frontseite des Lichtquellenträgers 2 eine sich im wesentlichen über dessen gesamte Länge erstreckende, im Querschnitt rechteckige Nut 9 vorgesehen.

Die Abmessungen dieser Nut 9 sind im Vergleich zu denen der in ihr angeordneten, von einem langgestreckten Band einer Elektroluminiszenzfolie gebildeten und mit Hilfe einer Klebstoffschicht 10 befestigten Lichtquelle 4 der Deutlichkeit halber etwas zu groß dargestellt. Tatsächlich sind die Breite und die Tiefe der Nut 9 so bemessen, daß die Längsseitenkanten des Bandes 4 die ihnen gegenüberliegenden Innenwandflächen der Nut 9 berühren und die Oberseite des Bandes 4 mit den links und rechts neben der Nut 9 stehen gebliebenen Steg-Oberseiten 12 in etwa fluchtet.

Auf diese Steg-Oberseiten 12 ist der Lichtaustrittskörper 3, der in Fig. 1 von einem Stab mit halbkreiszylindrischem Querschnitt aus einem lichtdurchlässigen Material gebildet wird, im zusammengebauten Zustand aufgeklebt.

Es sei ausdrücklich darauf hingewiesen, daß sowohl der Lichtquellenträger 2 als auch der Lichtaustrittskörper 3 jede beliebige andere langgestreckte Form besitzen können. Vorteilhaft ist dabei die sich in Längsrichtung erstreckende Nut 9, in der die Lichtquelle 4 untergebracht ist. Sowohl der Lichtquellenträger 2 als auch der Lichtaustrittskörper 3 können aus einem Material hergestellt sein, das so flexibel ist, daß die gesamte Anordnung an eine geschwungene Kontur des Dachhimmels einer Fahrzeug-Fahrgastzelle angepaßt werden kann.

Verschiedene Formen der Montage der in Fig. 1 gezeigten Leuchtanordnung 1 sind in den Fig. 2 und 3 dargestellt, die in schematischer Weise jeweils einen Ausschnitt eines Fahrgastinnenraums eines Kraftfahrzeuges mit einer Kopfstütze 14 des Fahrerssitzes, einem Lenkrad 15, einer Türschnalle 16 der Fahrertür, den Sonnenschutzblenden 17, 17 für Fahrer und Beifahrer und einem Innenrückspiegel 18 wiedergeben.

In Fig. 2 ist im Übergangsbereich zwischen Dachhimmel 20 und der Fahrer-Seitenwand eine sich nahezu über die gesamte Länge des Fahrgastinnenraums erstreckende Blende 21 dargestellt, an deren vorderem Bereich ein Haltegriff 22 montiert ist. Unter dieser Blende 21 erstreckt sich die Leuchtanordnung 1 aus Fig. 1, deren Licht durch die Seitenfläche 24 austritt, wie dies durch die Pfeile L dargestellt ist. Die Seitenfläche 24 kann entweder durch den Lichtaustrittskörper verschlossen oder ein offener Spalt sein.

An die Stelle der Blende 21 kann auch der Lichtquellenträger selbst treten, der dann eine entsprechende Form aufweist.

Auf der Beifahrerseite kann sich eine der Blende 21 entsprechende Blende (nicht dargestellt) erstrecken, hinter der ebenfalls eine Leuchtanordnung 1 gemäß Fig. 1 so positioniert sein kann, daß ihr Licht den Dachhimmel 20 so indirekt beleuchtet, wie dies oben für die auf der Fahrerseite befindliche Innenraumbeleuchtung beschrieben wurde.

Bei der in Fig. 3 gezeigten Ausführungsform erstreckt sich längs der Mittel-Längsachse der Fahrgastzelle eine Blende 25, unter der eine oder zwei Leuchtanordnungen 1 gemäß Fig.1 positioniert sein können. Hier sind allerdings auf beiden Seiten Lichtaustrittsbereiche vorgesehen, von denen in Fig. 3 nur der Bereich 27 sichtbar ist. Tatsächlich tritt aber das Licht nach beiden Seiten hin aus, um den Dachhimmel 20 indirekt zu beleuchten, wie dies wieder durch Pfeile L angedeutet ist.

Auch hier kann die Blende 25 gleichzeitig der Lichtquellenträger sein.

Bei dieser Variante ist der Haltegriff 22 unabhängig von der Fahrzeuginnenraumbeleuchtung befestigt.

Die Verwendung des in Fig. 1 dargestellten Lichtaustrittskörpers 3 ist nicht zwingend erforderlich. Vielmehr kann die Blende 21 bzw. 25 so ausgebildet sein, daß nach ihrer Montage an der Unterseite des Dachhimmels 20 zu diesem hin nur ein schmaler Spalt frei bleibt, durch den hindurch das von der Lichtquelle abgegebene Licht den Dachhimmel indirekt beleuchtet. Dieser Spalt, dessen Höhe so gering ist, daß die Lichtquelle aus einer normalen Sitzposition heraus nicht direkt gesehen werden kann, kann entweder völlig offen oder durch einen anderen als den in Fig. 1 gezeigten Lichtaustrittskörper bzw. eine Lichtaustrittsscheibe verschlossen sein.

## Patentansprüche

1. Fahrzeuginnenraumbeleuchtung, für eine von unten her erfolgende, indirekte Beleuchtung des Dachhimmels (20) des Innenraums eines Fahrzeugs, insbesondere eines Personenkraftwagens, dadurch gekennzeichnet, daß sie einen langgestreckten, zumindest an seiner Unterseite lichtundurchlässigen Abdeckkörper (21, 25) umfaßt, der von unten her in etwa parallel zur Längsrichtung des Fahrzeuginnenraums am Dachhimmel (20) montierbar ist und an den sich zum Dachhimmel (20) hin wenigstens ein lichtdurchlässiger Seitenbereich (24, 27) anschließt, durch den hindurch das Licht wenigstens einer zwischen dem Abdeckkörper (21, 25) und dem Dachhimmel (20) angeordneten Lichtquelle (4) gegen den Dachhimmel (20) abgestrahlt wird.

2. Fahrzeuginnenraumbeleuchtung nach Anspruch 1, dadurch gekennzeichnet, daß der lichtdurchlässige Seitenbereich (24, 27) wenigstens einen schmalen, sich in Längsrichtung der Fahrzeuginnenraumbeleuchtung erstreckenden Schlitz umfaßt, der eine so geringe Höhe besitzt, daß die wenigstens eine Lichtquelle (4) zumindest aus einer normalen Sitzposition heraus nicht direkt gesehen werden kann.

3. Fahrzeuginnenraumbeleuchtung nach Anspruch 1, dadurch gekennzeichnet, daß der lichtdurchlässige Seitenbereich (24, 27) wenigstens einen schmalen, sich in Längsrichtung der Fahrzeuginnenraumbeleuchtung erstreckenden Lichtaustrittskörper (3) umfaßt.

4. Fahrzeuginnenraumbeleuchtung nach Anspruch 3, dadurch gekennzeichnet, daß der Lichtaustrittskörper (3) mit dem lichtundurchlässigen Abdeckkörper (21, 25) verbunden ist.

5. Fahrzeuginnenraumbeleuchtung nach einem der vorhergehenden Ansprüche, dadurch gekennzeichnet, daß die wenigstens eine Lichtquelle (4) von einer Elektroluminiszenzfolie gebildet wird.

6. Fahrzeuginnenraumbeleuchtung nach einem der vorhergehenden Ansprüche, dadurch gekennzeichnet, daß sich der wenigstens eine lichtdurchlässige Seitenbereich (24, 27) in etwa über die gesamte Länge der Fahrzeuginnenraumbeleuchtung erstreckt.

7. Fahrzeuginnenraumbeleuchtung nach einem der vorhergehenden Ansprüche, dadurch gekennzeichnet, daß sich die Lichtquelle (4) in etwa über die gesamte Länge der Fahrzeuginnenraumbeleuchtung erstreckt.

8. Fahrzeuginnenraumbeleuchtung nach einem der vorhergehenden Ansprüche, dadurch gekennzeichnet, daß der Abdeckkörper (21) für eine seitliche Montage im Übergangsbereich zwischen Dachhimmel (20) und Seitenwand der Fahrgastzelle ausgebildet ist, und daß sich an ihn nur auf einer Längsseite ein lichtdurchlässiger Seitenbereich (24) anschließt.

9. Fahrzeuginnenraumbeleuchtung nach einem der Ansprüche 1 bis 8, dadurch gekennzeichnet, daß der Abdeckkörper (25) für eine Montage im Mittelbereich des Dachhimmels (20) ausgebildet ist, und daß sich an ihn auf jeder Längsseite ein lichtdurchlässiger Seitenbereich (24, 27) anschließt.

10. Fahrzeuginnenraumbeleuchtung nach einem der vorhergehenden Ansprüche, dadurch gekennzeichnet, daß sie einen Lichtquellenträger (2) umfaßt, an dem die wenigstens eine Lichtquelle (4) montiert ist.

11. Fahrzeuginnenraumbeleuchtung nach Anspruch 10, dadurch gekennzeichnet, daß der Lichtquellenträger (2) als sich im wesentlichen über die gesamte Länge der Fahrzeuginnenraumbeleuchtung erstreckendes Profil ausgebildet ist, das eine sich in Längsrichtung erstreckende Nut (9) zur Aufnahme der Lichtquelle (4) aufweist.

12. Fahrzeuginnenraumbeleuchtung nach Anspruch 11, dadurch gekennzeichnet, daß der Lichtquellenträger (2) aus einem verformbaren Material besteht und dadurch an den Konturverlauf des Dachhimmels (20) anpaßbar ist.

13. Fahrzeuginnenraumbeleuchtung nach einem der Ansprüche 3 bis 12, dadurch gekennzeichnet, daß der Lichtaustrittskörper (3) mit dem Lichtquellenträger (2) verbunden ist.

14. Fahrzeuginnenraumbeleuchtung nach einem der Ansprüche 10 bis 13, dadurch gekennzeichnet, daß der Lichtquellenträger (2) mit dem Abdeckkörper (21, 25) einstückig ausgebildet ist.
